# EUROPÄISCHE PATENTSCHRIFT

(11) **EP 0 733 841 B1**
(45) Veröffentlichungstag und Bekanntmachung des Hinweises auf die Patenterteilung: **13.01.1999**
(21) Anmeldenummer: 96103652.2
(22) Anmeldetag: 08.03.1996
(51) Int. Cl.: F16K 47/02, F16K 3/08

(54) **Mengenregulierventil**
Flow control valve
Vanne de réglage de débit

(30) Priorität: 22.03.1995 DE 19510289
(43) Veröffentlichungstag der Anmeldung: 25.09.1996
(73) Patentinhaber: FRIEDRICH GROHE AKTIENGESELLSCHAFT, D-58675 Hemer (DE)
(72) Erfinder: Pawelzik, Manfred, 59494 Soest (DE); Berg, Burghard, 58708 Menden (DE)

(56) Entgegenhaltungen:
- CH-A- 574 067
- DE-A- 3 127 737
- DE-U- 8 904 342
- FR-A- 2 485 147
- US-A- 5 082 241

## Beschreibung

Die Erfindung betrifft ein geräuscharmes Mengenregulierventil, insbesondere für Sanitärarmaturen, mit einem wenigstens eine axiale Einlaßöffnung und eine radiale Auslaßöffnung aufweisenden, in Armaturen einsetzbaren Gehäuse, in dem quer zur Längsachse eine mit wenigstens einer Durchtrittsöffnung versehene, Ventilsitzscheibe unverdrehbar gehaltert ist, und an der eine ebenfalls mit wenigstens einer Durchtrittsöffnung versehene mit einer Ventilspindel drehbare Ventilregulierscheibe anliegt, wobei stromabwärts hinter den Ventilscheiben Mittel zur Fließgeräuschminderung vorgesehen sind.
Ein derartiges Mengenregulierventil ist aus der deutschen Patentschrift DE 31 27 737 C2 bekannt. Bei diesem Mengenregulierventil ist zusätzlich zu anderen Fließgeräuschreduzierungsmaßnahmen eine relativ kompliziert ausgebildete und zu befestigende Siebplatte vorgesehen.

Der Erfindung liegt die Aufgabe zugrunde, das im Oberbegriff des Anspruchs 1 angegebene Mengenregulierventil zu verbessern, so daß einerseits eine optimale Fließgeräuschreduzierung erreicht wird, und andererseits eine einfache kostengünstige Herstellung der Mittel zur Fließgeräuschreduzierung ermöglicht wird. Hierbei gehört es mit zur Aufgabe, die Mittel zur Fließgeräuschreduzierung so auszubilden, daß sie automatisch montierbar sind, z. B. mit einem Montageroboter.

Diese Aufgabe wird erfindungsgemäß dadurch gelöst, daß als Mittel zur Fließgeräuschminderung eine rotationssymmetrisch gewölbte Siebscheibe oder Lochplatte vorgesehen ist, die koaxial zur stromabwärts gelegenen Ventilscheibe angeordnet ist, wobei der Scheitel der Wölbung sich etwa in der Mitte an der stromabwärts gelegenen Stirnseite der Ventilscheibe befindet.
Weitere Ausgestaltungen der Erfindung sind in den Ansprüchen 2 bis 17 angegeben.

Die mit der Erfindung erzielbaren Vorteile bestehen insbesondere darin, daß das geräuschdämpfende bzw. fließgeräuschreduzierende Bauteil automatisch herstellbar und automatisch montierbar ist, wobei mit dem vorgeschlagenen Bauteil bei dem Mengenregulierventil die Geräuschklasse I nach der deutschen Vorschrift DIN 4109 erfüllbar ist. Mit der rotationssymmetrischen Ausbildung der Siebscheibe oder Lochplatte ist sichergestellt, daß die Fließgeräuschminderung in gleichem Maße bei einem linksdrehenden oder rechtsdrehenden Mengenregulierventil erreicht wird.
Vorteilhaft wird das fließgeräuschmindernde Bauteil als Kunststoffsieb bzw. Kunststoffkörper im Druckgießverfahren hergestellt und zweckmäßig so gestaltet, daß es an einer Mitnehmerspindel bzw. Halteglied des Mengenregulierventils eingesteckt und/oder verschnappt wird.

Mit großem Vorteil kann die erfindungsgemäße Siebscheibe oder Lochplatte bei Ventileinsätzen mit einem Scheibendrehwinkel von 180° oder 90° und mit einem Einschraubgewinde von R 1/2" oder R 3/4" eingesetzt werden.

Ein Ausführungsbeispiel der Erfindung ist in der Zeichnung dargestellt und wird im folgenden näher beschrieben. Es zeigt
- Figur 1: ein Mengenregulierventil im Längsschnitt;
- Figur 2: das in Figur 1 gezeigte Mengenregulierventil in der Schnittebene II;
- Figur 3: die in Figur 1 gezeigte Ventilspindel mit Halteglied in Seitenansicht teilweise geschnitten;
- Figur 4: das in Figur 3 gezeigte Halteglied in Unteransicht;
- Figur 5: die in Figur 1 gezeigte Siebscheibe oder Lochplatte in vergrößerter Darstellung im Schnitt;
- Figur 6: die in Figur 5 gezeigte Lochplatte um 90° gedreht;
- Figur 7: die in Figur 6 gezeigte Lochplatte in Draufsicht.

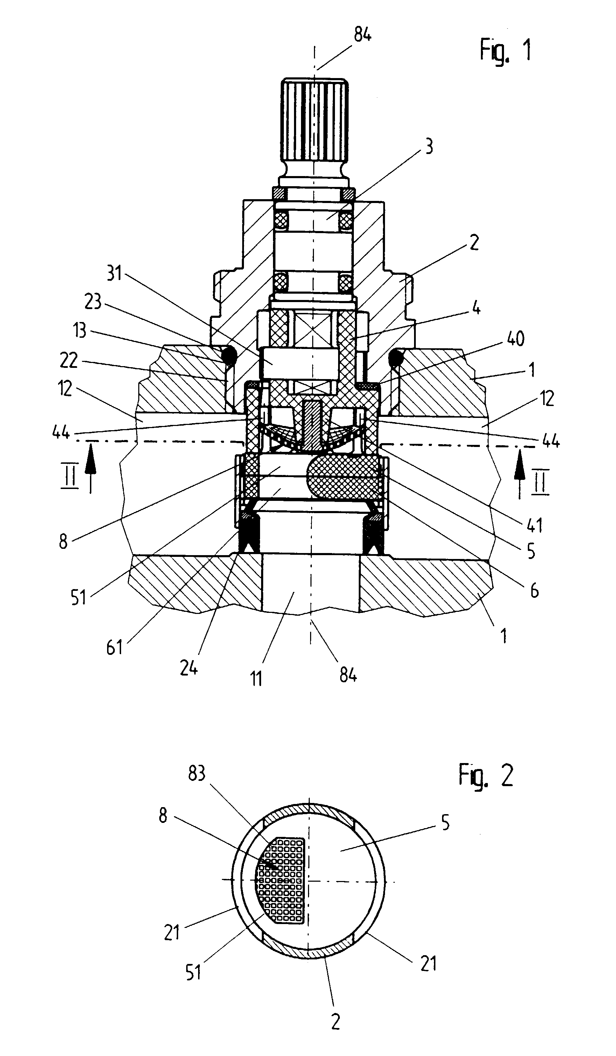

Das in Figur 1 und 2 gezeigte Mengenregulierventil ist als Baueinheit ausgebildet und in einem Armaturenkörper 1 einer Sanitärarmatur in einer Aufnahmebohrung 13 angeordnet, wobei in dem Armaturenkörper 1 ein Zulaufkanal 11 oder Ablaufkanal 12 für das zu steuernde Medium Wasser ausgebildet ist.
Das Mengenregulierventil ist hierbei in einem Gehäuse 2 angeordnet, welches mittels einem Dichtring 23 und einem Dichtelement 24 sowie einem R 1/2" Gewinde 22 gedichtet in der Aufnahmebohrung 13 des Armaturenkörpers 1 gehalten ist.
In dem Gehäuse 2 ist koaxial eine Ventilspindel 3 mit einem Anschlagnocken 31 begrenzt drehbar gelagert. An dem inneren Endbereich der Ventilspindel 3 ist ein Halteglied 4 aus Kunststoff angespritzt. Zur Axialsicherung ist an dem Halteglied 4 eine Ringschulter zur Aufnahme eines Gleitrings 40 ausgebildet, der an der gegenüberliegenden Seite an einer entsprechenden Schulter im Gehäuse 2 anliegt. An dem Halteglied 4 sind diametral gegenüberliegende Haltevorsprünge 42 angeformt, die als Axialanschlag für eine Ventilregulierscheibe 5 aus Hartstoff vorgesehen sind. Zur formschlüssigen Drehverbindung der Ventilregulierscheibe 5 mit dem Halteglied 4 sind außerdem an zwei diametral gegenüberliegenden Haltevorsprüngen 42 axial vorstehende Mitnehmer 43 angeformt, die in entsprechende Ausnehmungen in der Ventilregulierscheibe 5 einfassen.
Koaxial zur Mittelachse 84 ist an dem Halteglied 4 eine Aufnahme 41 für eine Siebscheibe oder Lochplatte 8 ausgebildet. Zwischen den Haltevorsprüngen 42 sind außerdem Radialschlitze 44 ausgebildet, durch die die radiale Abführung des zufließenden Wassers durch die Ablauföffnungen 21 in dem Gehäuse 2 erfolgt.
An der drehbar im Gehäuse 2 gehalterten Ventilregulierscheibe 5 ist eine drehfest im Gehäuse 2 gehalterte Ventilsitzscheibe 6 aus Hartstoff angelagert, wobei die aneinanderliegenden Oberflächen der Ventilregulierscheibe 5 und der Ventilsitzscheibe 6 derart geglättet sind, daß eine wasserdichte Anlage gewährleistet ist. In der Ventilsitzscheibe 6 ist außerdem eine Durchtrittsöffnung 61 ausgebildet. In der Ventilregulierscheibe 5 ist eine entsprechend der Durchtrittsöffnung 61 ausgebildete Durchtrittsöffnung 51 vorgesehen, wie es aus Figur 1 und 2 zu entnehmen ist.

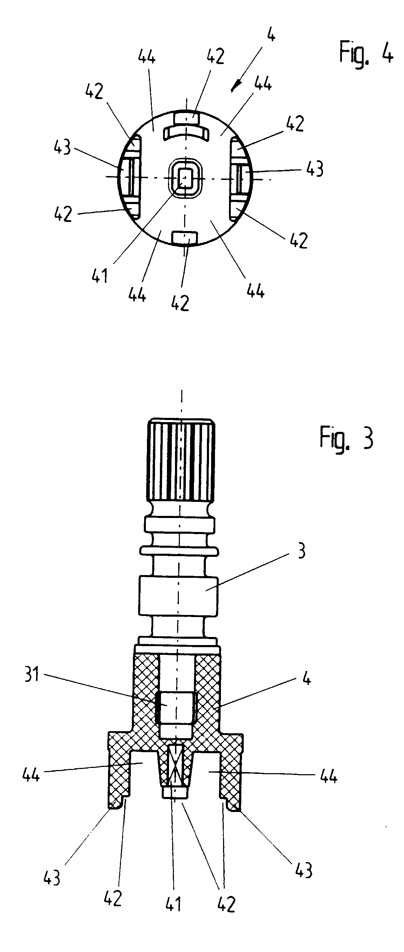

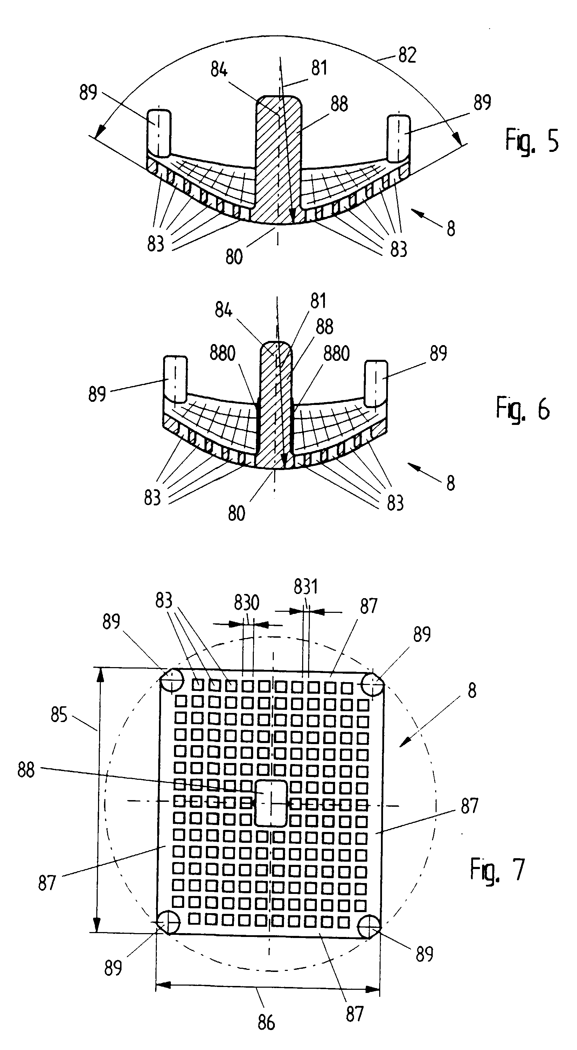

In dem Halteglied 4 ist die gewölbte Lochplatte 8 angeordnet, wobei sie zentral mit einem, im Querschnitt rechteckigen Haltestift 88 in der mit einem entsprechenden Öffnungsquerschnitt versehenen Aufnahme 41 fixiert ist. Hierbei erfolgt die Fixierung in der Stecklage durch Reibschluß mit Hilfe von zwei parallel zur Mittelachse 84 angeordneten Randwülsten 880, wie es insbesondere aus der Zeichnung Figur 6 zu entnehmen ist.
Die Lochplatte 8 liegt hierbei an den inneren Seitenwänden der vier symmetrisch an dem Halteglied 4 angeformten Haltevorsprünge 42 an. Die Anordnung der vier Haltevorsprünge 42 ist insbesondere aus Figur 4 zu entnehmen. Die Lochplatte 8 ist im Zentrum kugelförmig mit einem Kugelradius 81 von 8 mm gekrümmt, wobei in den Seitenbereichen die kugelförmige Krümmung in einen Kegel mit einem Kegelwinkel 82 von 120° übergeht. In der Lochplatte 8 sind Öffnungen 83 mit quadratischem Querschnitt vorgesehen, wobei die Seitenlänge 830 der Öffnung etwa 0,5 mm beträgt. Der Mindestabstand 831 der einzelnen Öffnungen 83 voneinander beträgt etwa 0,3 mm, wobei am Außenbereich ein umlaufender Rand 87 mit einer Breite von 0,25 bis 1 mm vorgesehen ist, in dem keine Öffnungen 83 vorgesehen sind, wie es insbesondere aus Figur 7 zu entnehmen ist.

Die Lochplatte 8 ist als Rechteck ausgebildet, welches eine maximale Länge 85 von etwa 13 mm und eine maximale Breite 86 von etwa 11 mm aufweist. An den Eckpunkten der Lochplatte 8 sind außerdem parallel zum Haltestift 88 Stützstifte 89 angeformt, die in der Stecklage an dem Halteglied 4 anliegen und eine stabile Lage der Lochplatte 8 in der Steckposition gewährleisten.

Das Halteglied 4 ist dabei so dimensioniert, daß, nach dem Einbringen der Lochplatte 8 mit dem Haltestift 88 in die Aufnahme 41 und die anschließende Anlagerung der Ventilregulierscheibe 5, der Scheitel der kugelförmigen Wölbung der Lochplatte 8 sich im Zentrum der Ventilregulierscheibe 5 im Bereich der stromabwärts gelegenen Oberfläche befindet. Das vom Zulaufkanal 11 anströmende Wasser gelangt somit über die Durchströmöffnungen 61, 51 in den Bereich des Halteglieds 4 und wird hier radial umgelenkt durch die Radialschlitze 44 und gelangt von hier durch die Ablauföffnungen 21 im Gehäuse 2 in den Ablaufkanal 12 des Armaturenkörpers 1. Mit der gewölbten Lochplatte 8 werden hierbei in unerwartetem Maße die an sich auftretenden Fließgeräusche reduziert.

Bei dem vorstehend beschriebenen Mengenregulierventil weisen die Ventilscheiben 5 und 6 lediglich jeweils eine Durchtrittsöffnung auf, so daß die Ventilspindel 3 des Mengenregulierventils von der Absperrstellung bis zur voll geöffneten Stellung eine Drehbewegung von 180° beschreibt. Selbstverständlich kann die erfindungsgemäß gewölbte Lochplatte 8 auch bei Mengenregulierventilen mit mehreren Durchtrittsöffnungen in der Ventilsitzscheibe und der Ventilregulierscheibe eingesetzt werden.
Anstatt des Haltestifts und der Stützstifte kann die Lochplatte auch unmittelbar an dem Halteglied befestigt oder auch mit einer Rasteinrichtung verschnappt sein. Anstatt der im Querschnitt quadratischen Öffnungen 83 in der Lochplatte 8 können diese auch einen Kreisquerschnitt oder einen anderen geeigneten Querschnitt aufweisen.

Alternativ kann auch die Lochplatte anstatt der kugelförmigen Wölbung eine kegelförmige oder pyramidenförmige Wölbung aufweisen.

Schließlich kann auch die Siebscheibe oder Lochplatte bei Scheibenventilen mit stromabwärts angeordneter Ventilsitzscheibe eingesetzt werden. Für den Durchtritt einer Ventilspindel kann hierbei im Scheitelbereich der Wölbung der Lochplatte eine entsprechende Öffnung vorgesehen werden.

## Patentansprüche

1. Geräuscharmes Mengenregulierventil, insbesondere für Sanitärarmaturen, mit einem wenigstens eine axiale Einlaßöffnung und eine radiale Auslaßöffnung (21) aufweisenden, in Armaturen einsetzbaren Gehäuse (2), in dem quer zur Längsachse (84) eine mit wenigstens einer Durchtrittsöffnung (61) versehene Ventilsitzscheibe (6) unverdrehbar gehaltert ist, und an der eine ebenfalls mit wenigstens einer Durchtrittsöffnung (51) versehene, mit einer Ventilspindel (3) drehbare Ventilregulierscheibe (5) anliegt, wobei stromabwärts hinter den Ventilscheiben (5,6) Mittel (8) zur Fließgeräuschminderung vorgesehen sind, dadurch gekennzeichnet, daß als Mittel zur Fließgeräuschminderung eine rotationssymmetrisch gewölbte Siebscheibe oder Lochplatte (8) vorgesehen ist, die koaxial zur stromabwärts gelegenen Ventilscheibe angeordnet ist, wobei der Scheitel (80) der Wölbung sich etwa in der Mitte an der stromabwärts gelegenen Stirnseite der Ventilscheibe befindet.

2. Mengenregulierventil nach Anspruch 1, wobei die Ventilregulierscheibe (5) stromabwärts angeordnet und von einem Halteglied (4) aufgenommen ist, dadurch gekennzeichnet, daß die Siebscheibe oder Lochplatte (8) in dem Halteglied (4) vorgesehen ist.

3. Mengenregulierventil nach Anspruch 1 oder 2, dadurch gekennzeichnet, daß die Siebscheibe oder Lochplatte (8) kugelförmig gewölbt ausgebildet ist.

4. Mengenregulierventil nach Anspruch 3, dadurch gekennzeichnet, daß ein Kugelradius (81) von 6 mm bis 12 mm, vorzugsweise 8 mm, für die Wölbung vorgesehen ist, wobei die Wölbung in den Seitenbereichen in einen Kegel mit einem Kegelwinkel (82) von 90° bis 150°, vorzugsweise 120°, übergeht.

5. Mengenregulierventil nach Anspruch 1 oder 2, dadurch gekennzeichnet, daß die Siebscheibe oder Lochplatte (8) kegelförmig oder pyramidenförmig ausgebildet ist.

6. Mengenregulierventil nach Anspruch 5, dadurch gekennzeichnet, daß die Siebscheibe oder Lochplatte (8) als Kegel mit einem Kegelwinkel von 90° bis 150°, vorzugsweise 120°, ausgebildet ist.

7. Mengenregulierventil nach einem der Ansprüche 1 bis 6, dadurch gekennzeichnet, daß in der Siebscheibe oder Lochplatte (8) Öffnungen (83) parallel zur Mittelachse (84) angeordnet sind.

8. Mengenregulierventil nach einem der Ansprüche 1 bis 7, dadurch gekennzeichnet, daß in der Siebscheibe oder Lochplatte (8) Öffnungen (83) mit einem quadratischen Querschnitt vorgesehen sind.

9. Mengenregulierventil nach einem der Ansprüche 1 bis 7, dadurch gekennzeichnet, daß in der Siebscheibe oder Lochplatte (8) Öffnungen (83) mit kreisförmigem Querschnitt vorgesehen sind.

10. Mengenregulierventil nach einem der Ansprüche 1 bis 9, dadurch gekennzeichnet, daß die Öffnungen (83) eine Seitenlänge (830) oder einen Durchmesser von 0,2 bis 1,0 mm, vorzugsweise 0,5 mm, aufweisen.

11. Mengenregulierventil nach einem der Ansprüche 1 bis 10, dadurch gekennzeichnet, daß die Öffnungen (83) einen Mindestabstand (831) zueinander von 0,1 bis 1,0 mm, vorzugsweise 0,3 mm, aufweisen.

12. Mengenregulierventil nach einem der Ansprüche 2 bis 11, dadurch gekennzeichnet, daß die Lochplatte (8) rechteckig oder quadratisch ausgebildet ist und von einem oder mehreren Vorsprüngen oder Schnappeinrichtungen am Halteglied (4) gehalten ist.

13. Mengenregulierventil nach Anspruch 12, dadurch gekennzeichnet, daß die Lochplatte (8) eine Länge (85) von 10 mm bis 14 mm und eine Breite (86) von 8 mm bis 12 mm aufweist, wobei ein umlaufender Rand (87) mit einer Breite von 0,25 mm bis 1,0 mm keine Öffnungen (83) aufweist.

14. Mengenregulierventil nach einem der Ansprüche 2 bis 13, dadurch gekennzeichnet, daß die Lochplatte (8) im Zentrum einen Haltestift (88) aufweist, der in eine Aufnahme (41) am Halteglied (4) in der Stecklage einfaßt.

15. Mengenregulierventil nach einem der Ansprüche 2 bis 14, dadurch gekennzeichnet, daß an den Eckpunkten der Lochplatte (8) jeweils ein Stützstift (89) angeordnet ist, die an dem Halteglied (4) in der Stecklage der Lochplatte (8) anliegen.

16. Mengenregulierventil nach einem der Ansprüche 1 bis 15, dadurch gekennzeichnet, daß die Lochplatte (8) einstückig im Spritzgießverfahren aus Kunststoff hergestellt ist.

17. Mengenregulierventil nach einem der Ansprüche 14 bis 16, dadurch gekennzeichnet, daß der Haltestift (88) mit einem oder mehreren parallel zur Mittelachse (84) verlaufenden Rastwülsten (880) versehen ist, die den Haltestift (88) mit der Lochplatte (8) in der Stecklage durch Reibschluß in der Aufnahme (41) halten.

## Claims

1. Low-noise flow regulation valve, especially for sanitary fittings, having a housing (2) that can be inserted in fittings and that has at least one axial inlet hole and a radial outlet hole (21) and in which a valve seat disc (6) having at least one through-hole (61) is held non-rotatably and transverse to the longitudinal axis (84), which valve seat disc (6) abuts a valve regulation disc (5) likewise provided with at least one through-hole (51) but capable of being rotated by means of a valve stem (3), with means (8) for flow noise reduction being provided downstream after the valve discs (5, 6), characterised in that, as means for flow noise reduction, there is provided a screen disc or perforated plate (8) that has a rotationally symmetrical convexity and that is arranged coaxially with respect to the downstream valve disc, the crown (80) of the convexity being located approximately centrally adjacent to the downstream end face of the valve disc.

2. Flow regulation valve according to claim 1, the valve regulation disc (5) being arranged downstream and accommodated by a holding element (4), characterised in that the screen disc or perforated plate (8) is provided in the holding element (4).

3. Flow regulation valve according to claim 1 or 2, characterised in that the screen disc or perforated plate (8) is constructed to have a spherical convexity.

4. Flow regulation valve according to claim 3, characterised in that a sphere radius (81) of from 6 mm to 12 mm, preferably 8 mm, is provided for the convexity, with the convexity merging in the side regions into a cone having an angle of taper (82) of from 90° to 150°, preferably 120°.

5. Flow regulation valve according to claim 1 or 2, characterised in that the screen disc or perforated plate (8) is constructed in the shape of a cone or pyramid.

6. Flow regulation valve according to claim 5, characterised in that the screen disc or perforated plate (8) is constructed as a cone having an angle of taper of from 90° to 150°, preferably 120°.

7. Flow regulation valve according to any one of claims 1 to 6, characterised in that holes (83) are arranged in the screen disc or perforated plate (8) parallel to the central axis (84).

8. Flow regulation valve according to any one of claims 1 to 7, characterised in that holes (83) of square cross-section are provided in the screen disc or perforated plate (8).

9. Flow regulation valve according to any one of claims 1 to 7, characterised in that holes (83) of circular cross-section are provided in the screen disc or perforated plate (8).

10. Flow regulation valve according to any one of claims 1 to 9, characterised in that the holes (83) have a length (830) at the sides or a diameter of from 0.2 to 1.0 mm, preferably 0.5 mm.

11. Flow regulation valve according to any one of claims 1 to 10, characterised in that the holes (83) have a minimum distance (831) from one another of from 0.1 to 1.0 mm, preferably 0.3 mm.

12. Flow regulation valve according to any one of claims 2 to 11, characterised in that the perforated plate (8) is constructed to be rectangular or square and is held by one or more projections or snap-in devices on the holding element (4).

13. Flow regulation valve according to claim 12, characterised in that the perforated plate (8) has a length (85) of from 10 mm to 14 mm and a width (86) of from 8 mm to 12 mm, with a peripheral margin (87) from 0.25 mm to 1.0 mm wide having no holes (83).

14. Flow regulation valve according to any one of claims 2 to 13, characterised in that the perforated plate (8) has, in the centre, a holding pin (88), which in the inserted position engages in a recess (41) on the holding element (4).

15. Flow regulation valve according to any one of claims 2 to 14, characterised in that a supporting pin (89) is arranged at each of the corner points of the perforated plate (8), which supporting pins (89) abut the holding element (4) when the perforated plate (8) is in the inserted position.

16. Flow regulation valve according to any one of claims 1 to 15, characterised in that the perforated plate (8) is produced in one piece from plastics by injection moulding.

17. Flow regulation valve according to any one of claims 14 to 16, characterised in that the holding pin (88) is provided with one or more locking ribs (880) running parallel to the central axis (84), which hold the holding pin (88), together with the perforated plate (8), in the inserted position in the recess (41) by means of frictional engagement.

## Revendications

1. Soupape peu bruyante de régulation de débit, pour robinets sanitaires en particulier, comportant un boîtier (2) à insérer dans un robinet et présentant au moins une orifice axial d'entrée et un orifice radial de sortie (21), un disque formant siège de soupape (6) et percé d'une ouverture de passage (61) étant logé dans ce boîtier, perpendiculairement à l'axe longitudinal (84) de celui-ci, disque sur lequel repose un disque de réglage (5) percé également d'au moins une ouverture de passage (51) et pouvant tourner avec une broche de soupape (3), des moyens (8) destinés à réduire le bruit d'écoulement étant prévus en aval derrière les disques de soupape (5, 6),
caractérisée en ce qu'
il est prévu, comme moyens de réduction du bruit d'écoulement un disque à tamis bombé de révolution ou une plaque perforée (8) monté coaxialement au disque de soupape situé en aval, le sommet (80) de la partie bombée se trouvant sensiblement au milieu de la face frontale du disque de soupape se trouvant en aval.

2. Soupape selon la revendication 1,
dont le disque (5) de réglage de la soupape est disposé en aval et logé dans un organe de maintien (4),
caractérisée en ce que
le disque à tamis ou la plaque perforée (8) est monté dans l'organe de maintien (4).

3. Soupape selon la revendication 1 ou 2,
caractérisée en ce que le disque à tamis ou la plaque perforée (8) est bombée en forme de sphère.

4. Soupape selon la revendication 3,
caractérisée en ce qu'
il est prévu, pour la partie bombée sphérique, un rayon (81) de 6 à 12 mm, de préférence 8 mm, se prolongeant latéralement selon un cône dont l'angle au sommet (82) est de 90° à 150°, de préférence 120°.

5. Soupape selon la revendication 1 ou 2,
caractérisée en ce que
le disque à tamis ou la plaque perforée (8) a la forme d'un cône ou d'une pyramide.

6. Soupape selon la revendication 5,
caractérisée en ce que
le disque à tamis ou la plaque perforée (8) a la forme d'un cône dont l'angle au sommet est de 90° à 150°, de préférence 120°.

7. Soupape selon une des revendications 1 à 6,
caractérisée en ce que
des ouvertures (83) parallèles à l'axe médian (84) sont prévues dans le disque à tamis ou la plaque perforée (8).

8. Soupape selon une des revendications 1 à 7,
caractérisé en ce que
des ouvertures (83) à section carrée sont prévues dans le disque à tamis ou la plaque perforée (8).

9. Soupape selon une des revendications 1 à 7,
caractérisée en ce que
des ouvertures (83) à section circulaire sont prévues dans le disque à tamis ou la plaque perforée.

10. Soupape selon l'une des revendications 1 à 9,
caractérisée en ce que
les ouvertures (83) ont un côté (830) ou un diamètre de 0,2 à 0,5 mm, de préférence 0,5 mm.

11. Soupape selon une des revendications 1 à 10,
caractérisée en ce que les ouvertures sont espacées entre elles d'un intervalle (831) de 0,1 à 1,0 mm, de préférence 0,3 mm

12. Soupape selon une des revendications 2 à 11,
caractérisée en ce que
la plaque perforée (8) a la forme d'un carré ou d'un rectangle maintenu dans l'organe de maintien (4) par une ou plusieurs saillies ou dispositifs à encliquetage.

13. Soupape selon la revendication 12,
caractérisée en ce que
la plaque perforée (8) a une longueur (85) de 10 à 14 mm et une largeur (86) de 8 à 12 mm, la zone périphérique (87) d'une largeur de 0,25 à 1,0 mm ne comportant aucune ouverture (83).

14. Soupape selon une des revendications 2 à 13,
caractérisée en ce que
la plaque perforée (8) présente en son centre une tige de maintien (88) qui, en position montée, se trouve dans un logement (41) de l'organe de maintien (4).

15. Soupape selon une des revendications 2 à 14,
caractérisée en ce que
chaque angle de la plaque perforée (8) porte une tige de soutien (89) qui, en position de montage de la plaque, est en appui sur l'organe de maintien (4).

16. Soupape selon une des revendications 1 à 15,
caractérisée en ce que
la plaque perforée (8) est une seule pièce de plastique, moulée par injection.

17. Soupape selon une des revendications 14 à 16,
caractérisée en ce que
la tige de maintien (88) porte un ou plusieurs bourrelets d'arrêt (880) qui sont parallèles à l'axe médian et qui en position de montage maintiennent la tige (88) et la plaque perforée dans le logement (41) par frottement.
